# EUROPEAN PATENT SPECIFICATION

(11) **EP 1 041 220 B1**
(45) Date of publication and mention of the grant of the patent: **19.09.2007**
(21) Application number: 00107007.7
(22) Date of filing: 30.03.2000
(51) Int. Cl.: E04H 4/16

(54) **Pool cleaner directional control method**
Methode zur Richtungssteuerung eines Beckenreinigers
Méthode de contrôle directionel d'un nettoyeur de bassin

(30) Priority: 01.04.1999 US 285020
(43) Date of publication of application: 04.10.2000
(73) Proprietor: Aquatron Inc., Delray Beach, FL 33445 (US)
(72) Inventor: Porat, Joseph, North Caldwell, NJ 07006 (US)
(74) Representative: Vossius & Partner

(56) References cited:
- FR-A- 2 729 995
- US-A- 4 786 334
- US-A- 5 569 371

## Description

This invention relates to the control of the pattern and direction of mouvement of robotic swimming pool and tank cleaners.

Pool and tank cleaners of the prior art generally operate in a random pattern of movement across the bottom of the pool or tank. The forward or advancing end of the cleaner can either be stopped and reversed at the sidewall of the pool, or be designed to climb the sidewall until the leading edge of the advancing end is at the waterline, after which the cleaner reorients itself and descends the sidewall and moves across the bottom of the pool along a different line of travel. By criss-crossing the pool for a sufficient period of time and along a sufficient number of varied paths, all, or substantially all, of the bottom of the pool is cleaned by the passing cleaner.

In very large rectangular pools, e.g., Olympic-sized pools maintained by educational institutions, water parks and municipalities, a substantial amount of time is required to assure that the cleaner following a random pattern will clean the entire bottom surface of the pool. It can arise that the cleaning cycle is longer than the time that can be alloted for this maintenance activity.

One solution that has been offered to expedite the cleaning of the pool is to join two or even three individual pool cleaners into a unitary parallel assembly in order to cover a path that is twice the width (for the double assembly) as would be covered by a single moving cleaner. This cleaner is also designed to operate in a random pattern. However, there are difficulties associated with the handling, transportation, storage and control of these double (or larger) units that present drawbacks to their use. These oversized units are heavy and can be difficult to remove from the pool due to their bulk and weight. The floating power cord is also necessarily long and heavy and subject to twisting and can interfere with the programmed pattern of the cleaner.

Another solution that has been developed for producing a more or less predictable scanning pattern by a pool cleaner is a gyroscopically controlled guidance system. This system is expensive to construct and must also be oriented at a prescribed starting point. Thereafter the unit follows a series of straight lines, the drive motors being controlled by the gyroscope, which result in a zig-zag pattern. The principal drawback is the cost of the unit.

US 4,786,334 discloses a method of cleaning the bottom of a pool with the aid of a pool cleaner, the pool cleaner travelling to and fro, with parallel movement at change of direction, in straight paths between two opposite walls of the pool while collecting material lying at the bottom of the pool, said pool cleaner comprising drive members governing movement of the pool cleaner and control means arranged to emit a control signal to the drive members in order to change the direction of travel when encountering a wall, comprising moving the pool cleaner in a straight path towards one wall,turning the pool cleaner a half turn, and simultaneously displacing the pool cleaner laterally perpendicular to the initial direction of travel, driving the pool cleaner thereafter on a path parallel to the initial direction of travel to the opposite wall of the pool, again turning the pool cleaner a half turn and simultaneously displacing the pool cleaner laterally in the same direction as the lateral displacement at the previous turn, and thereafter moving the pool cleaner back to the opposite wall of the pool and repeating the process until the bottom portion of the pool has been covered.

US 5,569,371 discloses a swimming pool cleaning, navigational controlled system comprising a robot, locomotion means for producing a steerable motion for the robot, impeller means, microprocessor means, signal processing means carried by the robot, at least two signal-detecting means, a mobile triangle apex and coupling means. The impeller means is movable with the robot and is used for drawing solids-entraining water from the floor of the pool through filter means and for returning the water after filtering to the pool. The filter means filters the solids-entraining water and is mounted adjacent to, and upstream of, the impeller means. The microprocessor means is associated with the robot for controlling the locomotion means in order to cause the robot to follow a preprogrammed route and to generate correction signals whenever, at a given instant, the actual location of the robot deviates from the preprogrammed route. The at least two signal-detecting means define together with the signal producing means a stationary triangulation base, wherein the signal-detecting means are fixedly mounted in spaced-apart relationship at, or in close proximity to each other, on at least one side of the pool and are acted upon by the signal-producing means. The mobile triangle apex is defined by the signal-producing means together with the signal detecting means. The coupling means is located on the ground in proximity to the pool and comprises a detector processing logic to receive and process data from the detecting means for transmission to the microprocessor means. In the system described in US 5,569,371, the actual robot location is determined by triangulation of the stationary triangulation base defined by the at least two spaced-apart signal detecting means and the mobile triangle apex.

It is therefore an object of this invention to provide a method for controlling the direction and pattern of a pool cleaner across the bottom of a pool or tank in order to minimize the time required to clean the entire bottom surface of the pool.

It is another object of this invention to provide a method that uses a pool cleaner that follows a regular geometric pattern that is parallel to the sidewalls of a rectilinear pool, and also a pattern in which subsequent paths traversing the area between the sidewalls are not only parallel, but also closely spaced to each other.

Yet another object of the invention is to provide a method in which the pool cleaner first traverses a plurality of parallel paths from side to side, and then when it reaches an end wall, turns and begins traversing a plurality of parallel, closely-spaced paths that extend from one end of the pool to the other.

Another object of the invention is to provide a method for controlling the movement of a robotic pool cleaner so that the cleaner's regular pattern is not interrupted or adversely affected by its encounters with the corners or other obstructions in or along the side walls of the pool being cleaned.

A still further, object of the invention is to provide a method that uses a robotic pool cleaner that is programmed to clean a rectilinear pool or tank in the most efficient manner possible, and to thereby reduce operating and maintenance expenses.

Yet another object of the invention is to provide a method that uses a robotic pool cleaner that follows a regular geometric pattern and whose motion is controlled so that the power supply cord does not interfere with the intended pattern due to a twisting or coiling of the cord.

It is yet another object of the invention to provide a method that uses a pool cleaner that can accomplish the above objects at a cost that is relatively less expensive than the prior art gyroscopically-controlled cleaners.

The above objects, as well as other advantages, are achieved with the method of the invention in which a robotic pool cleaner comprising a pair of separate traction means disposed at either end of the cleaner housing has each of the traction means mounted for independent rotation and each set of traction means on the opposing side of the cleaner are powered by separate first and second traction motors. The speed and/or direction of rotation of each of the separate motors is directed by a programmable controller, the controller also being responsive to sensor signals received from one or more sensors mounted on, or in, the cleaner. In one preferred embodiment, the controller comprises the following means to accomplish the indicated functions:
means for activating the traction motors to move the cleaner across the bottom of a pool or tank;
means responsive to a signal from said one or more sensors to stop the traction motors when the forward end of the cleaner is adjacent a first sidewall of the pool;
means for activating the first traction motor while the cleaner is proximate the first sidewall;
means responsive to a signal from said one or more sensors to stop the first traction motor when the advancing opposite end of the cleaner is proximate the first sidewall; and
means for activating both traction motors to move the cleaner in a direction away from the first sidewall towards another sidewall.

It an especially preferred embodiment of the invention described above, the controller also comprises the following:
means for activating the second traction motor to move the traction means in a direction opposite to the direction of the first traction motor for a prescribed period of time until the cleaner has turned approximately 90° from the side wall; and
means responsive to a timer for stopping the second traction motor when the cleaner has turned approximately 90°.

In another preferred embodiment, where the pool cleaner is adapted to climb the side wall of the pool the controller further comprises:
means responsive to said one or more sensors to stop the traction motor when the cleaner is at a prescribed angle from the horizontal;
means for activating both traction motors to return to cleaner to the bottom wall of the pool;
means responsive to said one or more sensors to stop the traction motors when the cleaner is on the bottom wall of the pool; and
means as described above to activate the traction motors to turn the cleaner and move it in a direction away from the first side wall towards another side wall.

It is to be understood that in the context of this description the pool cleaner is of generally symmetrical construction and that the traction means are mounted for rotation on axles that are positioned at opposite ends of the cleaner. As used herein, the term "advancing end" refers to the end of the cleaner in the direction of movement. This will include the pivoting or rotating motion of the cleaner as it turns to reverse its orientation along a given sidewall. Thus, once the cleaner has come to a stop proximate a sidewall, what had previously been the trailing or after end becomes the advancing end for the purposes of the turn.

The power source can be batteries contained in a floating water-tight battery container connected by a power cord. In order to clean a large, e.g., Olympic-sized pool, a conventional electrical power source external to the pool is likely to be required. As will be apparent to one of ordinary skill in the art, the random turning of the cleaner over a prolonged period of time can cause the floating power cord to become tightly coiled and/or twisted to such an extent that it acts as a tether and interferes with the movement of the cleaner, as by pulling the cleaner off of its programmed straight-line course.

In order to avoid the problems attendant this twisting or coiling of the cord, in the method and apparatus of the invention, the cleaner is programmed to follow a course by which a turn in one direction that tends to induce a right-hand twist in the power supply cord is followed by a turn in a direction that tends to induce a left-hand twist in the cord. In this way, no significant twisting of the power cord occurs with the practice of the invention.

The traction means can take the form of generally cylindrical roller brushes, endless traction belts or wheels. The preferred form of traction means are roller brushes, which brushes can be fabricated from expanded polymeric foam or from a molded flexible polymer sheet that is formed into a generally cylindrical configuration. In addition to providing the surface contact to move the cleaner across the bottom of the pool, the roller brushes also dislodge dirt and debris from the surface that is drawn up by the water pump through the filter media to be entrained inside of the cleaner.

The number and placement of the sensors that generate signals that are transmitted to the programmable controller is dependent upon the type of sensor employed. For example, if infrared sensors are used, a single sensor can be placed on either end of the cleaner body. The infrared sensor will detect the reflection of an infrared beam from the sidewall that the cleaner approaches and transmit a signal to the controller to switch off power to the traction motors or motor. In another embodiment, a single flow meter is mounted on the exterior housing of the cleaner and functions by transmitting a signal when the flow through the meter ceases after the advancing movement of the cleaner is stopped by a sidewall. Similarly, a mechanical or electro-mechanical sensor in the form of a rod or shaft that projects beyond the leading edge of the advancing cleaner and that is caused to move is retracted by contact with the wall when the cleaner approaches a sidewall, which movement results in a signal being transmitted to the controller.

In one preferred embodiment, a magnetic field sensor is employed either in conjunction with a free-running wheel that moves in contact with the bottom surface of the pool as the cleaner traverses, or as part of a flow meter or other type of mechanical sensor. As will be explained in more detail below, a magnetic field sensor is preferred because it can also determine whether the cleaner has completed a full U-turn of 180°, or only some lesser turn.

In the case of a cleaner that is designed to climb the side wall of the pool, the sensor can be a mercury switch which transmits a signal when the body of the cleaner reaches a prescribed angle to the horizontal, e.g., from about 30° to about 70°. The prescribed angle must be greater than the angle of any portion of the bottom of the pool that slopes from the shallow to the deeper end of the pool. When the controller receives the signal from the mercury switch, it returns the cleaner to the bottom of the pool, where it stops the cleaner in response to a further signal.

From the above, it will be understood that the cleaner may approach the corner of a pool at a distance along the sidewall so that the cleaner completes more than a 90° turn, but less than a 180° turn, and so that its advance is thereby halted, the cleaner facing into the corner at, e.g., a 45° angle with the opposing forward corners of the pool cleaner housing against the side and end walls of the pool.

If the cleaner were to follow the sequence of steps described above, both drive motors would be activated and the cleaner would leave the corner at an angle (e.g., 45°), and thereafter would no longer be following a path that was parallel to a side or end wall of the pool. In anticipation of this eventual contingency, in one preferred embodiment, the improved cleaner of the invention is provided with a magnetic sensor that is calibrated to detect the approximate number of degrees achieved by the cleaner in turning away from a sidewall. In an especially preferred embodiment of such a magnetic sensor, a free-running contact wheel is positioned along the central longitudinal axis of the cleaner and bias-mounted so that it remains in constant contact with the bottom of the pool as the cleaner commences a turn from the stopped position. The contact wheel is fabricated with a plurality of spaced-apart magnetic elements about its periphery and a magnetic field reader is positioned approximate the periphery of the wheel. A previously determined but arbitrary number of magnetic elements will pass the counter when the cleaner makes a turn of 180°, for example, about 100; if the cleaner completes only a turn of 90°, about 50 elements will have passed the counter; and if the cleaner turns into a corner so that a turn of approximately 135° is completed, approximately 75 magnetic elements will have turned past the counter. It is to be understood that the magnetic counter is reset to "zero" after the cleaner has stopped in its advancement, so that the counter starts from zero when the cleaner begins its turning maneuver.

In the event that a 90° turn is completed, e.g., a count of 50 on the sensor, the controller is programmed to respond by powering both motors to drive the traction means away from the wall, thereby causing the cleaner to commence a path that is parallel to the adjacent sidewall from which it has just turned away and at right angles to the prior paths traversed.

If the magnetic counter passes the 90° mark (e.g., a count greater than 50), but does not achieve the full 180° turn (e.g., a count of less than 100), the controller is programmed to first stop the drive motor for the advancing traction means and to then reverse the direction of the drive motor until the magnetic counter indicates that the cleaner is at 90° to its original starting position, and is now parallel to the sidewall that it has just left. For example, if the counter reaches 80, the traction means is run in reverse until the counter reaches 50 (indicating a 90° turn from the original starting position), after which the cleaner is halted in a position that is parallel to the side wall and perpendicular to the previous travel path. The controller then activates the drive motors for both traction means to move the cleaner parallel to the sidewall and at right angles to its former traversing paths.

If the cleaner is equipped at each end with a directionally sensitive infrared source and reflective signal-generating sensor positioned on the central longitudinal axis of the unit, no signal will be generated when the cleaner is stopped in a corner, or by an obstacle that prevents the cleaner from drawing near to the wall with its longitudinal axis essentially normal to the wall. When the controller initiates the U-turn maneuver, it also starts a timer. If the controller does not receive a wall sensor signal within a first prescribed period of time, e.g., fifteen seconds, the controller deactivates the traction motor(s). The controller then activates at least one of the traction motors to reverse the direction of movement of the cleaner for a second prescribed period of time, which is less than the first prescribed period of time, e.g., five seconds, to move and reorient the cleaner to a position that is parallel to the wall from which the U-turn was initiated.
Thereafter, the controller activates both traction motors to advance the cleaner in a path that is at right angles to its prior movements traversing the bottom of the pool and parallel to the side wall from which it last departed.

In a preferred embodiment of the method described above, the controller activates the sensor for the first prescribed period of time during which the cleaner is programmed to complete the U-turn. This is done in order to eliminate false signals from a sensor, such as an IR sensor, while the cleaner is turning. The sensor is reactivated after the prescribed period of time, and if it is facing a wall, it sends a signal received by the controller and the controller activate the traction motors to move the cleaner away from the wall in a straight line.

In a cleaner equipped with one or more mercury switches, the controller initiates a timer when the cleaner starts the U-turn maneuver and if a sensor signal is not received after a prescribed period of time, e.g., fifteen seconds, the controller deactivates the traction motor and starts the reverse movement cycle to back the cleaner out of the corner or other blocked position.

In accordance with conventional design parameters, the improved cleaner is of approximately neutral buoyancy. The cleaner is provided with one or more water pumps which draw dirt and debris up from the surface being cleaned, and discharge the water through one or more openings in a direction that produces a force that maintains the cleaner in contact with the surface being traversed.

As the cleaner accumulates dirt and debris in its filter system, the cleaner becomes less buoyant, and the force of the water discharged vertically from the pump can impede or interfere with the pivotal turning of the cleaner during its repositioning when it reaches a side or end wall of the pool or tank. In order to obviate this possibility, the controller is provided with means to reduce the power to the pump motor so that the volumetric discharge and therefore the downward force on the cleaner is reduced during the turning operation. In a preferred embodiment, the volumetric discharge or measurable force is reduced during turns to approximately 20% of the force normally produced during the cleaning operation.

The invention will be further described with reference to the following preferred embodiments in which like elements are referred to by the same number, and where
Fig. 1 is a top perspective view of one embodiment of a pool cleaner used in a method in accordance with the invention;
Fig. 2 is schematic plan view of various elements associated with the cleaner of Fig. 1;
Fig. 3 is a plan view of a pool schematically illustrating the path of a pool cleaner in accordance with the invention;
Fig. 4 is a plan view similar to Fig. 3 illustrating another embodiment of the invention;

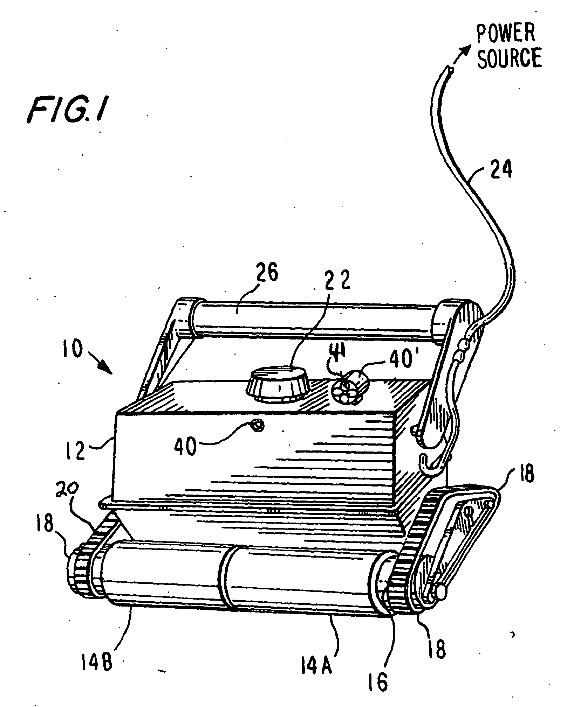

The above objects and other advantages are provided by the invention, which will be described with reference to Fig. 1 where the pool cleaner, generally referred to as 10, is comprised of a cover or body-housing 12 on which are mounted independently rotatable traction means 14A and 14B. In the embodiment of Fig. 1, the traction means 14 are roller brushes fabricated from a molded elastomeric polymer such as PVA that provides good traction for cleaner against ceramic tile pool bottoms and sidewalls, if the cleaner is designed to ascend the sidewalls of a pool or tank. The roller brushes can also be constructed from an assembly of expanded foam and other materials that are well known in the art.

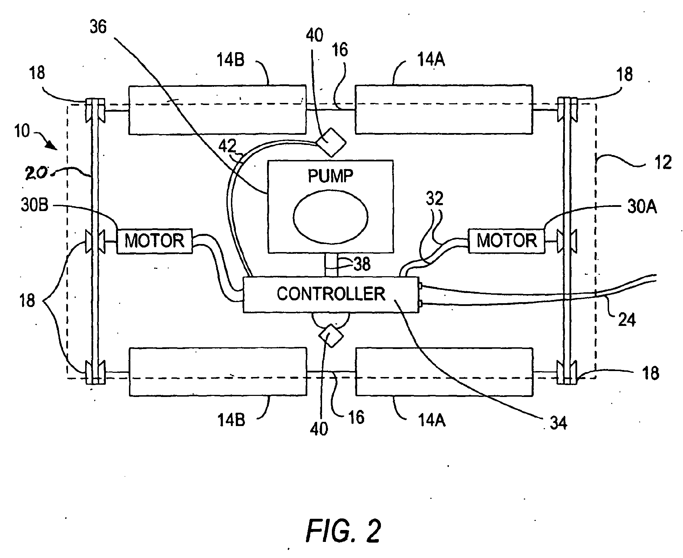

With further reference to Fig. 1 and the schematic plan of Fig. 2, the traction means 14 are mounted for rotation on axles 16 extending transversely across either end of the cleaner and terminating in pulleys 18, which in this embodiment are outboard of the rollers 14. Pulleys 18 are preferably provided with transverse grooves and drive belts 20 with corresponding lugs to engage the grooves to provide a non-slip power train from variable speed motor 30, preferably a DC brushless motor. Because of the frequent stopping and starting of the traction motors 30, as well as their changes in direction, it is important that the drive train between the traction motors and the traction means 14 operates without slipping and overrun.

With continuing reference to Fig. 1, cover 12 is provided with a pump discharge aperture 22 by means of which the filtered water expelled by the pump produces an opposing force that maintains the traction means 14 in contact with the bottom, or in another preferred embodiment, the sidewall, of the pool. A buoyant power cord 24 is shown attached to handle 26 and extends from an external power source, not shown, to the interior of the cleaner housing 12.

Returning to Fig. 2, independent traction motors 30A and 30B drive traction means 14A and 14B, respectively. The speed and/or direction of motors 30 is controlled by a microprocessor or programmable electronic controller 34 that is connected to motors by conductors 32 and also in a preferred embodiment to pump 36 by conductors 38. Controller 34 is programmed to respond to signals received from one or more signal-generating sensors 40 via conductors 42.

An especially preferred configuration of pool cleaner that can be modified and adapted for use in the invention is sold by Aqua Products Inc. of Cedar Grove, New Jersey under the designation and trademark ULTRA-MAX. This cleaner is provided with a pair of power-driven traction rollers that are axle-mounted at each end of the cleaner. In the embodiment required for the practice of the invention, the traction means must be separately mounted so that the rollers at the opposite ends on one side of the cleaner are driven by a separately powered and controlled traction motor. In other words, the front and rear traction means on the right side of the cleaner are driven by a right traction motor and the front and rear traction means on the left side of the cleaner are driven by a left traction motor. The speed and direction of the respective traction motors are controlled by the programmable controller. In turn, the programmable controller responds to signals transmitted by the one or more signal-generating sensors.

In one preferred embodiment, a pair of infrared source/detecting sensors 40 are fitted in the opposing ends of cover 12 at a position corresponding to the longitudinal axis of the cleaner. As used herein, the longitudinal axis of the cleaner means the central axis taken along the line of advance of the cleaner. The infrared sensors should be placed on or very close to the longitudinal axis in order that the reflected beam not be detected should the cleaner become stopped at a corner of the pool, or by some other obstruction in or along the pool from which the controller will reverse the direction of movement of the cleaner, as will be described in more detail below.

Referring again to Fig. 1, there is shown as an alternative, a fluid-flow sensor 40' that is mounted on an exterior surface of the cleaner housing 12. The fluid-flow sensor 40' can be constructed with an impeller 41 mounted for rotation when the cleaner moves through the water thereby generating a current or other form of signal, e.g., magnetic, that is received by the controller 34 for processing. Although a single mercury switch can be used in another preferred embodiment of the invention, one or more back-up sensors can be installed to provide the system with a measure of redundancy in the event that one of the sensors fails or malfunctions.

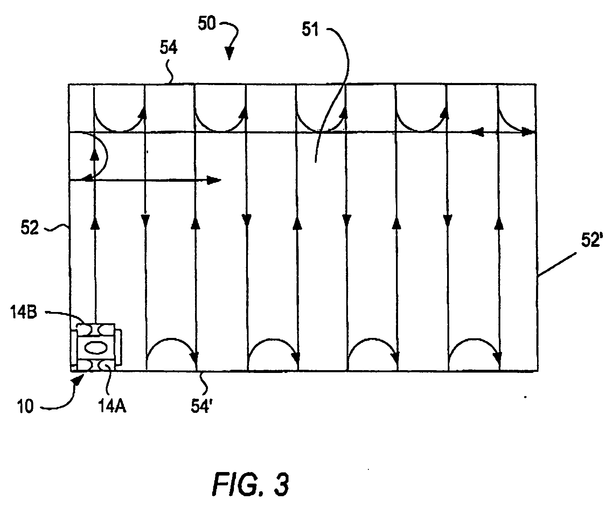

The practice of one preferred embodiment of the invention will be described with reference to Fig. 3 where there is schematically illustrated a plan view of a pool into which is placed a pool cleaner 10 of the invention. The cleaner 12 is placed in the lower left hand corner of the pool as represented in the illustration of Fig. 3, and in accordance with the invention is programmed to traverse the pool in a straight line parallel to end wall 52 across bottom 51. When the cleaner reaches wall 54 a sensor 40 generates a signal that is transmitted to controller 34 which causes both traction motors 30 to be deactivated or stopped. In this embodiment, reference will be to the assembly as illustrated in Fig. 2. Traction motor 30B is activated to move traction means 14B in a direction opposite to that used to traverse the pool on the first leg and to thereby move the cleaner away from wall 54. If traction motor 30A remains stopped, the cleaner will complete a U-turn, or an 180° turn, in a radius that is somewhat greater than the width of the cleaner body 12. In order to complete the 180° turn with a shorter radius, traction motor 30A can move traction means 14A in a direction toward wall 54. In a preferred embodiment, traction motor 30A is operated in this mode until about one-half or 90° of the turn has been completed. This sequence of the steps for the method is described below.

In a first step, the machine has started to move toward the wall. In a second step, the traction motors are moving in one direction. In a following step, an infrared sensor has detected the wall. In a fourth step, traction motor A will turn opposite to traction motor B for five seconds. That will allow the machine to move 90° off the wall. Only when the motors turn in a opposite to each other, the speed of the pump motor is reduced in order to reduce the downward force and allow the machine to turn freely.

In a fifth step, after five seconds, traction motor A which is close to the wall will stop and traction motor B which is further away from the wall will continue to work in the same direction as for 15 seconds. While motor B is moving towards the wall, the infrared sensor program is deactivated.

In a sixth step, after 15 seconds, motor A will start to work together with motor B in the same direction toward the wall.

In a following step 7, only at this time, the infrared sensor is reactivated in order to detect the wall. When the infrared sensor detects the wall, traction motors A and B will reverse and the pool cleaner will move toward the other side of the pool.

In step 8, the machine will arrive at the other side of the pool. The infrared sensor will detect the wall and repeat the same sequence.

In the practice of the method of the invention, the controller 34 will be programmed to activate traction motor 30A for a prescribed period of time, which time is easily determined for each particular cleaner and the conditions found in the pool, and will be dependent upon such parameters as the speed at which the traction means are operated, the size of the traction means and their materials of construction, the nature of the pool surface, among other things.

When the cleaner has completed its first U-turn against wall 54, a signal is generated by the one or more sensors 40 that is transmitted to the controller, which then deactivates or stops traction motor 30B and thereafter activates both traction motors to move the cleaner away from wall 54 in a straight line that is parallel to the first track and which moves the cleaner towards wall 54'.

When the cleaner 10 reaches wall 54', the process is repeated, with the important exception that traction motor 30A is on the outside of the cleaner during the 180° U-turn. This sequence of turns is important to the successful practice of the method of the invention, particularly in larger pools, and especially in Olympic-size pools, because it avoids the twisting and tight coiling of the floating power cord. Thus, any twisting of the power cord is at most 180°, and because of the alternating turns is regularly untwisted.

With continued reference to Fig. 3, the regular transverse parallel pattern of the cleaner 10 continues until the final partial turn shown at the upper right hand side when the cleaner completes about half or 90° of the turn as it approaches end wall 52'. As the cleaner approaches the wall, the sensor 40 generates a signal that is transmitted to the controller 34 which deactivates and stops the traction motor 30B. Thereafter the controller activates both traction motors to move the cleaner 10 away from wall 52' along a straight line that is parallel to wall 50. When the cleaner reaches end wall 52 it commences the scanning pattern of 180° U-turns and parallel traverses of the pool bottom in the manner described above. In the event that the final traverse brings the cleaner into a partial turn in the lower left-hand corner of the pool, the cleaner will be slightly offset from its original traverse between walls 54' and 54; similarly, if the cleaner completes its final traverse at the lower right-hand corner of the pool, it will repeat its traversing pattern, in reverse, from right to left in this illustration.

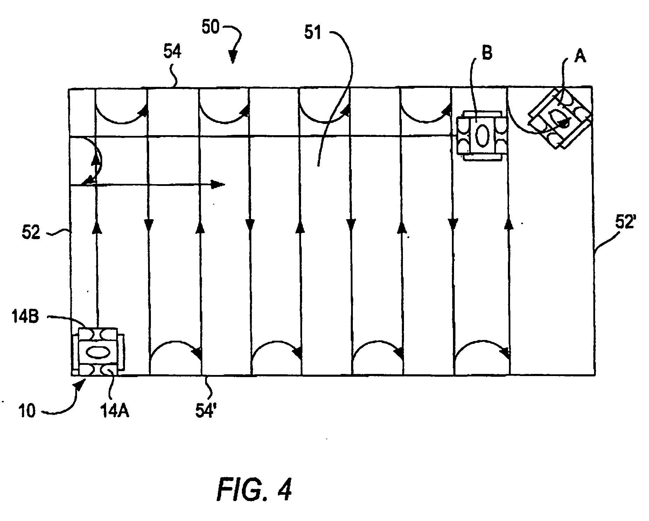

A further important feature of the apparatus and method of the invention is illustrated in the schematic plan view of Fig. 4. In this illustration, the cleaner 10 has completed any number of parallel traverses between walls 54 and 54', but the final turn is greater than 90° but less than 180°, leaving the cleaner immobilized in the upper right hand corner formed by walls 54 and 52'. In the preferred embodiment of the invention that is best adapted to return the cleaner to a regular traversing path, the one or more sensors 40 are of the infrared or mercury switch type. In either event, when the cleaner 10 is in the position A as shown in Fig. 4, the infrared sensor cannot "see" its reflected beam and therefore will generate no signal to be transmitted to the controller. Likewise, the cleaner equipped with a mercury switch cannot climb either wall, and its one or more mercury switches remain in the horizontal position. In order to return the cleaner to a regular scanning pattern, the controller is programmed to initiate a timer at the commencement of each U-turn, and if no signal is received within a prescribed period of the time that would be sufficient to have completed a U-turn, the controller stops the advance of the traction means and then reactivates the outer traction means, which in this instance would be traction means 14B for a second shorter predetermined period of time to bring the longitudinal axis of the cleaner parallel to sidewall 54, at which point the traction motor 30B is deactivated or stopped. Thereafter, the controller activates both traction motors to advance the cleaner away from wall 52' to assume a path that is similar to that shown in Fig. 3. The sequence of steps employed in the practice of this method of the invention are described below.

In a first step, when the machine arrives at a corner of the pool, it will start the sequence of scanning. When motor A stops and motor B starts turning, the machine may hit the other wall of the pool and stop at an angle of 45° to the pool's corner. In a second step, if the machine is at 45° to the wall, the infrared sensor will not detect the wall. After 20 seconds, if the infrared sensor still has not detected a wall, the microprocessor will activate its secondary program which will signal motor A and motor B to turn in opposite directions for five seconds. In a third step, after five seconds, both of the motors form in the same direction to continue the scanning program.

From the above description, it will be understood that the invention provides a method that systematically cleans the bottom of a pool in a pattern that is much more efficient than any random pattern known to the art. Furthermore, the use of a microprocessor or electronic programmable controller is much more cost effective and provides a significant cost savings as compared to the gyroscopically guided cleaners of the prior art. Within the scope of the appended claims, the invention can be adapted for use in various models of cleaners known in the art which can be retrofitted with the sensors, microprocessors, wiring changes and, if required, synchonizable motors. When programmed for scanning in accordance with the method of the invention, corking or twisting of the floating power cord is avoided, or so minimized that there is no interference with the prescribed scanning movement of the cleaner.

## Claims

1. A method for cleaning the bottom wall (51) of a pool or tank comprising:
(a) providing a robotic pool cleaner (10) that advances in the direction of its longitudinal axis comprising a pair of separate traction means (14A, 14B) disposed on either side of its longitudinal axis and at either end of the cleaner (10) where the traction means (14A, 14B) are selected from the group consisting of roller brushes, endless traction belts and wheels, each pair of the traction means (14A, 14B) on either side of the cleaner (10) mounted for independent rotation, a separate traction motor (30A, 30B) operatively connected to each pair of the traction means (14A, 14B), a programmable controller (34), and one or more signal-generatingwall sensors (40; 40') connected to the controller (34), the traction means (14A, 14B) on each side of the cleaner (10) being powered by one of the separate traction motors (30A, 30B), the speed and/or the direction of rotation of each of said separate motors (30A, 30B) being directed by the programmable controller(34), said controller (34) being responsive to sensor signals received from the one or more wall sensors (40, 40');
(b) activating the controller (34) to move the pool cleaner (10) by rotation of the traction means (14A, 14B) across the bottom (51) of a pool or tank toward a side wall (54, 54');
(c) stopping the rotation of the traction means (14A, 14B) in response to a wall sensor signal when the traction means at the advancing end of the cleaner are proximate a side wall (54, 54') of the pool or tank;
(d) reversing the direction of rotation of the traction means (14A, 14B) on one side of the cleaner (10) to thereby turn the cleaner 180°;
(e) stopping the rotation of the traction means (14A, 14B) when the advancing end of the turning cleaner (10) is proximate the side wall (54, 54') of the pool or tank;
(f) activating both traction means (14A, 14B) to move the cleaner (10) away from the side wall (54, 54') toward another side wall (54, 54'); and
(g) repeating steps (c) through (f).

2. The method of claim 1 where the roller brushes are selected from the group consisting of expanded foam polymer brushes and solid molded polymer brushes.

3. The method of any of the preceding claims, where the power to the motors (30A, 30B) is conducted from a source external to the pool or tank through a power cord (24).

4. The method of claim 3 where the traction means (14A, 14B) on one side of the cleaner is activated in step (d) in an alternating sequence with the traction means (14A,14B) on the other side of the cleaner (10) when the cleaner moves from one side wall (54, 54') to another side wall (54,54').

5. The method of any one of the preceding claims, where the movement of the traction means (14A,14B) is responsive to a sensor signal from a visible light sensor or an infrared sensor (40).

6. The method of any one of claims 1 to 4, where the movement of the traction means (14A, 14B) is responsive to a sensor signal generated by the movement of a mechanical sensor.

7. The method of any one of claims 1 to 4, where the movement of the traction means (14A, 14B) is responsive to a sensor signal generated by a magnetic field sensor.

8. The method of any one of claims 1 to 4, where the movement of the traction means (14A, 14B) is responsive to a sensor signal generated by a fluid flow sensor.

9. The method of any one of the preceding claims, where the cleaner (10) moves across the bottom (51) of the pool or tank in a generally straight line.

10. The method of any one of the preceding claims, where the controller (34) maintains the speed of the traction motors (30A, 30B) at substantially the same RPM when the cleaner moves across the bottom (51) of the pool between the side walls (54, 54').

11. The method of any one of the preceding claims, where the cleaner moves across the bottom (51) of the pool between the side walls (54, 54') in an arcuate path.

12. The method of any one of claims 1 to 9, where the controller (34) maintains the speed of the traction motors at a predetermined differential RPM while the cleaner is moving across the bottom (51) of the pool or tank between the side alls (54, 54').

13. The method of claim 11 or 12, where the difference in the RPMs of the traction motors is adjusted manually.

14. The method of any one of the preceding claims, where, in step (d), the traction means (14A, 14B) on the side of the cleaner (16) opposite the moving traction means (14A, 14B) is stationary.

15. The method of any one of the preceding claims, where, in step (d), the traction means (14A, 14B) on the side of the cleaner (10) opposite the traction means moving away from the wall (54, 54') is rotated toward the adjacent side wall.

16. The method of any one of the preceding claims, where the cleaner (10) further comprises a water pump (36) and the method comprises reducing the volume of water discharged from the pump (36) when the cleaner is proximate a side wall (54, 54') of the pool or tank.

17. The method of claim 16 where the discharge of the water pump (36) is reduced while the cleaner (10) is turning proximate the side wall (54, 54').

18. The method of claim 17 where the reduced discharge of the water pump (36) is sufficient to maintain the traction means (14A, 14B) in contact with the bottom (51) of the pool or tank.

19. The method of any one of the preceding claims, where the sensor is a mercury switch and in steps (c) and (d) the end of the cleaner has advanced up the side wall (54,54') to position the cleaner (10) at an angle that is greater than about 30° to the horizontal when the traction means (14A,14B) are stopped, which method comprises the further steps:
reversing the direction of rotation of the traction means (14A, 14B) to move the cleaner (10) down the wall to a position on the bottom (51) of the pool; and stopping the rotation of the traction means in response to a sensor signal when the cleaner is on the bottom (51) of the pool.

20. The method according to claim 1, further comprising:
(a) providing each of the one or more sensors being as a mercury switch;
(b) activating the controller (34) to move the pool cleaner (10) by rotation of the traction means (14A, 14B) across the bottom (51) of a pool or tank toward a side wall (54, 54') and thereafter up the side all (54, 54') ;
(c) stopping the rotation of the traction means (14A, 14B) in response to a sensor signal when the advancing end of the cleaner (10) has positioned the cleaner (10) at an angle that is greater than about 30° to the horizontal;
(d) reversing the direction of rotation of the traction means (14A,14B) to move the cleaner (10) down the wall (54, 54') and to a position on the bottom (51) of the pool;
(e) stopping the rotation of the traction means (14A, 14B) in response to a sensor signal when the cleaner (10) is on the bottom (51) of the pool;
(f) reversing the direction of rotation of the traction means (14A, 14B) on one side of the cleaner (10) to thereby turn the cleaner 180°;
(g) stopping the rotation of the traction means (14A, 14B) in response to a sensor signal when the advancing end of the turning cleaner has positioned the cleaner (10) at an angle that is greater than about 30° to the horizontal;
(h) reversing the direction of rotation of the traction means (14A,14B) to move the cleaner (10) down the wall and to a position on the bottom (51) of the pool;
(i) stopping the rotation of the traction means (14A, 14B) in response to a sensor signal when the cleaner (10) is on the bottom (51) of the pool;
(j) activating both traction means (14A,14B) to move the cleaner (10) away from the side wall (54, 54') toward another side wall (54, 54'); and
(k) repeating steps (c) through (j).

21. The method of claim 20 where the traction means (14A, 14B) are molded elastomeric PVA brushes mounted on cylindrical supports.

22. The method of any one of the preceding claims, where the power to the motors (30A) is conducted from a source external to the pool or tank through a power cord (24).

23. The method of claim 22 where the traction means (14A,14B) on one side of the cleaner is activated in step (f) in an alternating sequence with the traction means (14A, 14C) on the other side of the cleaner (10) when the cleaner moves from one side wall (54, 54') to another side wall (54, 54').

24. The method of any one of claims 1 to 23, wherein said one or more signal-generating wall sensors is at least a magnetic sensor, detecting the approximate number of degrees achieved by the cleaner in turning away from a sidewall, by means of a free-running contact wheel positioned along the central longitudinal axis of the cleaner in constant contact with the bottom of the pool.

## Patentansprüche

1. Verfahren zum Reinigen der Bodenwand (51) eines Beckens oder Behälters mit den folgenden Schritten:
(a) Bereitstellen eines automatischen Beckenreinigers (10), der sich in Richtung seiner Längsachse vorbewegt, mit einem Paar getrennter Fahreinrichtungen (14A, 14B), die auf jeder Seite seiner Längsachse und an jedem Ende des Reinigers (10) angeordnet sind, wobei die Fahreinrichtungen (14A, 14B) aus der Gruppe ausgewählt sind, die aus Walzenbürsten, Endlosfahrriemen und Rädern besteht und jedes Paar der Fahreinrichtungen (14A, 14B) auf jeder Seite des Reinigers (10) zur unabhängigen Drehung angeordnet ist, einem getrennten Fahrmotor (30A, 30B), der mit jedem Paar der Fahreinrichtungen (14A, 14B) betrieblich verbunden ist, einer programmierbaren Steuerung (34) und einem oder mehreren signalerzeugenden Wandsensoren (40; 40'), die mit der Steuerung (34) verbunden sind, wobei die Fahreinrichtungen (14A, 14B) auf jeder Seite des Reinigers (10) durch einen der getrennten Fahrmotoren (30A, 30B) angetrieben werden, die Drehzahl und/oder Drehrichtung jedes der getrennten Fahrmotoren (30A, 30B) durch die programmierbare Steuerung (34) bestimmt wird und die Steuerung (34) auf Sensorsignale reagiert, die sie von dem einen oder den mehreren Wandsensoren (40; 40') empfängt;
(b) Aktivieren der Steuerung (34), um den Beckenreiniger (10) durch Drehung der Fahreinrichtungen (14A, 14B) über den Boden (51) eines Beckens oder Behälters zu einer Seitenwand (54, 54') zu bewegen;
(c) Stoppen der Drehung der Fahreinrichtungen (14A, 14B) als Reaktion auf ein Wandsensorsignal, wenn die Fahreinrichtungen am vorrückenden Ende des Reinigers nahe einer Seitenwand (54, 54') des Beckens oder Behälters sind;
(d) Umkehren der Drehrichtung der Fahreinrichtung (14A, 14B) auf einer Seite des Reinigers (10), um **dadurch** den Reiniger 180° zu drehen;
(e) Stoppen der Drehung der Fahreinrichtung (14A, 14B), wenn das vorrückende Ende des drehenden Reinigers (10) nahe der Seitenwand (54, 54') des Beckens oder Behälters ist;
(f) Aktivieren beider Fahreinrichtungen (14A, 14B), um den Reiniger (10) von der Seitenwand (54, 54') zu einer anderen Seitenwand (54, 54') wegzubewegen; und
(g) Wiederholen der Schritte (c) bis (f).

2. Verfahren nach Anspruch 1, wobei die Walzenbürsten aus der Gruppe ausgewählt sind, die aus expandierten Schaumpolymerbürsten und massiven geformten Polymerbürsten besteht.

3. Verfahren nach einem der vorstehenden Ansprüche, wobei der Strom zu den Motoren (30A, 30B) von einer Quelle außerhalb des Beckens oder Behälters über ein Stromkabel (24) geleitet wird.

4. Verfahren nach Anspruch 3, wobei die Fahreinrichtung (14A, 14B) auf einer Seite des Reinigers im Schritt (d) in abwechselnder Folge mit der Fahreinrichtung (14A, 14B) auf der anderen Seite des Reinigers (10) aktiviert wird, wenn sich der Reiniger von einer Seitenwand (54, 54') zu einer anderen Seitenwand (54, 54') bewegt.

5. Verfahren nach einem der vorstehenden Ansprüche, wobei die Bewegung der Fahreinrichtungen (14A, 14B) auf ein Sensorsignal von einem Sensor für sichtbares Licht oder einem Infrarotsensor (40) reagiert.

6. Verfahren nach einem der Ansprüche 1 bis 4, wobei die Bewegung der Fahreinrichtungen (14A, 14B) auf ein Sensorsignal reagiert, das durch die Bewegung eines mechanischen Sensors erzeugt wird.

7. Verfahren nach einem der Ansprüche 1 bis 4, wobei die Bewegung der Fahreinrichtungen (14A, 14B) auf ein Sensorsignal reagiert, das durch einen Magnetfeldsensor erzeugt wird.

8. Verfahren nach einem der Ansprüche 1 bis 4, wobei die Bewegung der Fahreinrichtungen (14A, 14B) auf ein Sensorsignal reagiert, das durch einen Flüssigkeitsdurchflußsensor erzeugt wird.

9. Verfahren nach einem der vorstehenden Ansprüche, wobei sich der Reiniger (10) über den Boden (51) des Beckens oder Behälters allgemein geradlinig bewegt.

10. Verfahren nach einem der vorstehenden Ansprüche, wobei die Steuerung (34) die Geschwindigkeit der Fahrmotoren (30A, 30B) im wesentlichen auf der gleichen Drehzahl hält, wenn sich der Reiniger über den Boden (51) des Beckens zwischen den Seitenwänden (54, 54') bewegt.

11. Verfahren nach einem der vorstehenden Ansprüche, wobei sich der Reiniger über den Boden (51) des Beckens zwischen den Seitenwänden (54, 54') auf einem bogenförmigen Weg bewegt.

12. Verfahren nach einem der Ansprüche 1 bis 9, wobei die Steuerung (34) die Geschwindigkeit der Fahrmotoren auf einer vorbestimmten Differenzdrehzahl hält, während sich der Reiniger über den Boden (51) des Beckens oder Behälters zwischen den Seitenwänden (54, 54') bewegt.

13. Verfahren nach Anspruch 11 oder 12, wobei die Drehzahldifferenz der Fahrmotoren manuell eingestellt wird.

14. Verfahren nach einem der vorstehenden Ansprüche, wobei im Schritt (d) die Fahreinrichtung (14A, 14B) auf der Gegenseite des Reinigers (10) zu der sich bewegenden Fahreinrichtung (14A, 14B) feststehend ist.

15. Verfahren nach einem der vorstehenden Ansprüche, wobei im Schritt (d) die Fahreinrichtung (14A, 14B) auf der Gegenseite des Reinigers (10) zu der sich von der Wand (54, 54') wegbewegenden Fahreinrichtung zur benachbarten Seitenwand gedreht wird.

16. Verfahren nach einem der vorstehenden Ansprüche, wobei der Reiniger (10) ferner eine Wasserpumpe (36) aufweist und das Verfahren den Schritt des Reduzierens des aus der Pumpe (36) geförderten Wasservolumens aufweist, wenn der Reiniger nahe einer Seitenwand (54, 54') des Beckens oder Behälters ist.

17. Verfahren nach Anspruch 16, wobei die Fördermenge der Wasserpumpe (36) reduziert wird, während der Reiniger (10) nahe der Seitenwand (54, 54') dreht.

18. Verfahren nach Anspruch 17, wobei die reduzierte Fördermenge der Wasserpumpe (36) ausreicht, die Fahreinrichtungen (14A, 14B) in Kontakt mit dem Boden (51) des Beckens oder Behälters zu halten.

19. Verfahren nach einem der vorstehenden Ansprüche, wobei der Sensor ein Quecksilberschalter ist und in den Schritten (c) und (d) das Ende des Reinigers die Seitenwand (54, 54') so weit hochgefahren ist, daß der Reiniger (10) in einem Winkel positioniert ist, der größer als etwa 30° zur Waagerechten ist, wenn die Fahreinrichtungen (14A, 14B) gestoppt werden, wobei das Verfahren die folgenden weiteren Schritte aufweist:
Umkehren der Drehrichtung der Fahreinrichtungen (14A, 14B), um den Reiniger (10) an der Wand herab zu einer Position auf dem Boden (51) des Beckens zu bewegen; und Stoppen der Drehung der Fahreinrichtungen als Reaktion auf ein Sensorsignal, wenn sich der Reiniger auf dem Boden (51) des Beckens befindet.

20. Verfahren nach Anspruch 1, ferner mit den folgenden Schritten:
(a) Bereitstellen des einen oder der mehreren Sensoren jeweils als Quecksilberschalter;
(b) Aktivieren der Steuerung (34), um den Beckenreiniger (10) durch Drehung der Fahreinrichtungen (14A, 14B) über den Boden (51) eines Beckens oder Behälters zu einer Seitenwand (54, 54') und danach an der Seitenwand (54, 54') heraufzubewegen;
(c) Stoppen der Drehung der Fahreinrichtungen (14A, 14B) als Reaktion auf ein Sensorsignal, wenn das vorrückende Ende des Reinigers (10) den Reiniger (10) in einem Winkel positioniert hat, der größer als etwa 30° zur Waagerechten ist;
(d) Umkehren der Drehrichtung der Fahreinrichtungen (14A, 14B), um den Reiniger (10) an der Wand (54, 54') herab und zu einer Position auf dem Boden (51) des Beckens zu bewegen;
(e) Stoppen der Drehung der Fahreinrichtungen (14A, 14B) als Reaktion auf ein Sensorsignal, wenn sich der Reiniger (10) auf dem Boden (51) des Beckens befindet;
(f) Umkehren der Drehrichtung der Fahreinrichtung (14A, 14B) auf einer Seite des Reinigers (10), um **dadurch** den Reiniger 180° zu drehen;
(g) Stoppen der Drehung der Fahreinrichtung (14A, 14B) als Reaktion auf ein Sensorsignal, wenn das vorrückende Ende des drehenden Reinigers den Reiniger (10) in einem Winkel positioniert hat, der größer als etwa 30° zur Waagerechten ist;
(h) Umkehren der Drehrichtung der Fahreinrichtung (14A, 14B), um den Reiniger (10) an der Wand herab und zu einer Position auf dem Boden (51) des Beckens zu bewegen;
(i) Stoppen der Drehung der Fahreinrichtung (14A, 14B) als Reaktion auf ein Sensorsignal, wenn sich der Reiniger (10) auf dem Boden (51) des Beckens befindet;
(j) Aktivieren beider Fahreinrichtungen (14A, 14B), um den Reiniger (10) von der Seitenwand (54, 54') zu einer anderen Seitenwand (54, 54') wegzubewegen; und
(k) Wiederholen der Schritte (c) bis (j).

21. Verfahren nach Anspruch 20, wobei die Fahreinrichtungen (14A, 14B) geformte elastomere PVA-Bürsten sind, die auf zylindrischen Stützen angeordnet sind.

22. Verfahren nach einem der vorstehenden Ansprüche, wobei der Strom zu den Motoren (30A, 30B) von einer Quelle außerhalb des Beckens oder Behälters über ein Stromkabel (24) geleitet wird.

23. Verfahren nach Anspruch 22, wobei die Fahreinrichtung (14A, 14B) auf einer Seite des Reinigers im Schritt (f) in abwechselnder Folge mit der Fahreinrichtung (14A, 14B) auf der anderen Seite des Reinigers (10) aktiviert wird, wenn sich der Reiniger von einer Seitenwand (54, 54') zu einer anderen Seitenwand (54, 54') bewegt.

24. Verfahren nach einem der Ansprüche 1 bis 23, wobei der eine oder die mehreren signalerzeugenden Wandsensoren mindestens ein Magnetsensor sind, der die annähernde Gradzahl, die der Reiniger beim Wegdrehen von einer Seitenwand erreicht, mit Hilfe eines freilaufenden Kontaktrads detektiert, das entlang der Mittelachse des Reinigers in ständigem Kontakt mit dem Boden des Beckens positioniert ist.

## Revendications

1. Procédé de nettoyage du fond (51) d'une piscine ou d'un réservoir comprenant :
(a) le fait de prévoir un nettoyeur de piscine robotisé (10) qui avance dans la direction de son axe longitudinal comprenant une paire de moyens de traction séparés (14A, 14B) disposés de chaque côté de son axe longitudinal et à chaque extrémité du nettoyeur (10), dans lequel les moyens de traction (14A, 14B) sont sélectionnés parmi le groupe consistant en des rouleaux à brosses, des courroies de traction sans fin et des roues et chaque paire de moyens de traction (14A, 14B) de chaque côté du nettoyeur (10) est montée en vue d'une rotation indépendante, un moteur de traction séparé (30A; 30B) relié de manière opérationnelle à chaque paire de moyens de traction (14A, 14B), un contrôleur programmable (34), et un ou plusieurs capteurs de parois générant un signal (40 ; 40') et relié(s) au contrôleur (34), les moyens de traction (14A, 14B) de chaque côté du nettoyeur (10) étant alimentés par l'un des moteurs de traction séparés (30A, 30B), la vitesse et/ou la direction de rotation de chacun desdits moteurs séparés (30A, 30B) étant dictée par le contrôleur programmable (34), ledit contrôleur (34) réagissant aux signaux du capteur reçus de la part du ou des capteur(s) de parois (40, 40') ;
(b) l'activation du contrôleur (34) de façon à déplacer le nettoyeur de piscine (10) par la rotation des moyens de traction (14A, 14B) au sein du fond (51) d'une piscine ou d'un réservoir, vers une paroi latérale (54, 54') ;
(c) l'arrêt de la rotation des moyens de traction (14A, 14B) en réponse à un signal de capteur de parois lorsque les moyens de traction, au niveau de l'extrémité d'avancement du nettoyeur, sont proches d'une paroi latérale (54, 54') de la piscine ou du réservoir ;
(d) l'inversion de la direction de rotation du moyen de traction (14A, 14B) sur un côté du nettoyeur (10) afin de tourner le nettoyeur à 180° ;
(e) l'arrêt de la rotation du moyen de traction (14A, 14B) lorsque l'extrémité d'avancement du nettoyeur tourné (10) est proche de la paroi latérale (54, 54') de la piscine ou du réservoir ;
(f) l'activation des deux moyens de traction (14A, 14B) afin de déplacer le nettoyeur (10) à l'écart de la paroi latérale (54, 54'), vers une autre paroi latérale (54, 54') ; et
(g) la répétition des étapes (c) à (f).

2. Procédé selon la revendication 1, dans lequel les rouleaux à brosses sont sélectionnés parmi le groupe consistant en brosses en mousse de polymère expansée et en brosses en polymère moulé solide.

3. Procédé selon l'une quelconque des revendications précédentes, dans lequel l'alimentation des moteurs (30A, 30B) provient d'une source externe à la piscine ou au réservoir, par le biais d'un câble d'alimentation (24).

4. Procédé selon la revendication 3, dans lequel le moyen de traction (14A, 14B) d'un côté du nettoyeur est activé à l'étape (d) de manière alternée avec le moyen de traction (14A, 14B) de l'autre côté du nettoyeur (10) lorsque le nettoyeur se déplace d'une paroi latérale (54, 54') vers une autre paroi latérale (54, 54').

5. Procédé selon l'une quelconque des revendications précédentes, dans lequel le mouvement des moyens de traction (14A, 14B) réagit à un signal de capteur provenant d'un capteur de lumière visible ou d'un capteur infrarouge (40).

6. Procédé selon l'une quelconque des revendications 1 à 4, dans lequel le mouvement des moyens de traction (14A, 14B) réagit à un signal de capteur généré par le mouvement d'un capteur mécanique.

7. Procédé selon l'une quelconque des revendications 1 à 4, dans lequel le mouvement des moyens de traction (14A, 14B) réagit à un signal de capteur généré par un capteur de champ magnétique.

8. Procédé selon l'une quelconque des revendications 1 à 4, dans lequel le mouvement des moyens de traction (14A, 14B) réagit à un signal de capteur généré par un capteur d'écoulement de fluide.

9. Procédé selon l'une quelconque des revendications précédentes, dans lequel le nettoyeur (10) se déplace au sein du fond (51) de la piscine ou du réservoir selon une ligne généralement droite.

10. Procédé selon l'une quelconque des revendications précédentes, dans lequel le contrôleur (34) maintient la vitesse des moteurs de traction (30A, 30B) sensiblement au même nombre de tr/minute lorsque le nettoyeur se déplace au sein du fond (51) de la piscine entre les parois latérales (54, 54').

11. Procédé selon l'une quelconque des revendications précédentes, dans lequel le nettoyeur se déplace au sein du fond (51) de la piscine entre les parois latérales (54, 54'), selon un trajet courbe.

12. Procédé selon l'une quelconque des revendications 1 à 9, dans lequel le contrôleur (34) maintient la vitesse des moteurs de traction à un nombre de tr/minute différentiel prédéterminé pendant que le nettoyeur se déplace au sein du fond (51) de la piscine ou du réservoir entre les parois latérales (54, 54').

13. Procédé selon la revendication 11 ou 12, dans lequel la différence de nombre de tr/minute des moteurs de traction est ajustée manuellement.

14. Procédé selon l'une quelconque des revendications précédentes, dans lequel, à l'étape (d), le moyen de traction (14A, 14B) sur le côté du nettoyeur (10) opposé au moyen de traction en mouvement (14A, 14B) est stationnaire.

15. Procédé selon l'une quelconque des revendications précédentes, dans lequel, à l'étape (d), le moyen de traction (14A, 14B) sur le côté du nettoyeur (10) opposé au moyen de traction se déplaçant à l'écart de la paroi (54, 54') est tourné vers la paroi latérale adjacente.

16. Procédé selon l'une quelconque des revendications précédentes, dans lequel le nettoyeur (10) comprend en outre une pompe à eau (36) et le procédé comprend la réduction du volume de l'eau évacuée par la pompe (36) lorsque le nettoyeur est proche d'une paroi latérale (54, 54') de la piscine ou du réservoir.

17. Procédé selon la revendication 16, dans lequel l'évacuation de la pompe à eau (36) est réduite pendant que le nettoyeur (10) tourne près de la paroi latérale (54, 54').

18. Procédé selon la revendication 17, dans lequel l'évacuation réduite de la pompe à eau (36) est suffisante pour maintenir les moyens de traction (14A, 14B) en contact avec le fond (51) de la piscine ou du réservoir.

19. Procédé selon l'une quelconque des revendications précédentes, dans lequel le capteur est un commutateur au mercure et, aux étapes (c) et (d), l'extrémité du nettoyeur a avancé jusqu'à la paroi latérale (54, 54') afin de positionner le nettoyeur (10) à un angle qui est supérieur à environ 30° par rapport à l'horizontale lorsque les moyens de traction (14A, 14B) sont arrêtés, ledit procédé comprenant les étapes supplémentaires consistant à :
inverser la direction de rotation des moyens de traction (14A, 14B) afin de déplacer le nettoyeur (10) vers le bas de la paroi jusqu'à un emplacement sur le fond (51) de la piscine ; et arrêter la rotation des moyens de traction en réponse à un signal de capteur lorsque le nettoyeur se trouve au fond (51) de la piscine.

20. Procédé selon la revendication 1, comprenant en outre :
(a) le fait de prévoir du ou des capteur(s) comme un commutateur au mercure;
(b) l'activation du contrôleur (34) afin de déplacer le nettoyeur de piscine (10) par la rotation des moyens de traction (14A, 14B) au sein du fond (51) d'une piscine ou d'un réservoir, vers une paroi latérale (54, 54'), puis vers le haut de la paroi latérale (54, 54') ;
(c) arrêter la rotation des moyens de traction (14A, 14B) en réponse à un signal de capteur lorsque l'extrémité d'avancement du nettoyeur (10) a positionné le nettoyeur (10) à un angle qui est supérieur à environ 30° par rapport à l'horizontale ;
(d) inverser la direction de rotation des moyens de traction (14A, 14B) afin de déplacer le nettoyeur (10) vers le bas de la paroi (54, 54') et jusqu'à un emplacement sur le fond (51) de la piscine ;
(e) arrêter la rotation des moyens de traction (14A, 14B) en réponse à un signal de capteur lorsque le nettoyeur (10) se trouve sur le fond (51) de la piscine ;
(f) inverser la direction de rotation du moyen de traction (14A, 14B) d'un côté du nettoyeur (10) afin de tourner ainsi le nettoyeur à 180° ;
(g) arrêter la rotation du moyen de traction (14A, 14B) en réponse à un signal de capteur lorsque l'extrémité d'avancement du nettoyeur tournant a positionné le nettoyeur (10) à un angle qui est supérieur à environ 30° par rapport à l'horizontale ;
(h) inverser la direction de rotation du moyen de traction (14A, 14B) afin de déplacer le nettoyeur (10) vers le bas de la paroi et jusqu'à un emplacement sur le fond (51) de la piscine ;
(i) arrêter la rotation du moyen de traction (14A, 14B) en réponse à un signal de capteur lorsque le nettoyeur (10) se trouve sur le fond (51) de la piscine ;
(j) activer les deux moyens de traction (14A, 14B) afin de déplacer le nettoyeur (10) à l'écart de la paroi latérale (54, 54'), vers une autre paroi latérale (54, 54') ; et
(k) répéter les étapes (c) à (j).

21. Procédé selon la revendication 20, dans lequel les moyens de traction (14A, 14B) sont des brosses en PVA élastomérique moulé montées sur des supports cylindriques.

22. Procédé selon l'une quelconque des revendications précédentes, dans lequel l'alimentation des moteurs (30A, 30B) est assurée depuis une source externe à la piscine ou au réservoir, par un câble d'alimentation (24).

23. Procédé selon la revendication 22, dans lequel le moyen de traction (14A, 14B) d'un côté du nettoyeur est activé à l'étape (f) de manière alternée avec le moyen de traction (14A, 14B) de l'autre côté du nettoyeur (10) lorsque le nettoyeur se déplace d'une paroi latérale (54, 54') vers une autre paroi latérale (54, 54').

24. Procédé selon l'une quelconque des revendications 1 à 23, dans lequel ledit ou lesdits capteur(s) de parois générant un signal est/sont au moins un capteur magnétique, détectant le nombre approximatif de degrés atteint par le nettoyeur lorsqu'il tourne par rapport à une paroi latérale, à l'aide d'une roue de contact à rotation libre positionnée le long de l'axe longitudinal central du nettoyeur en contact constant avec le fond de la piscine.
